# EUROPÄISCHE PATENTANMELDUNG

(11) **EP 4 792 996 A1**
(43) Veröffentlichungstag der Anmeldung: **19.08.2026**
(21) Anmeldenummer: 25158151.8
(22) Anmeldetag: 14.02.2025
(51) Int. Cl.: B25J 9/16, G05B 19/4061, G05B 19/4069

(54) **VERFAHREN ZUR ERSTELLUNG EINER SICHERHEITSKONFIGURATION**

(71) Anmelder: SICK AG, 79183 Waldkirch (DE)
(72) Erfinder: Wittmeier Steffen, 79813 Waldkirch (DE); Pokrandt, Peter, 76474 Au am Rhein (DE); Grimm, Jonas, 79106 Freiburg (DE); Hehl, Ulrich, 79108 Freiburg (DE); Schubert, Tobias, 79346 Endingen (DE)
(74) Vertreter: Manitz Finsterwald Patent- und Rechtsanwaltspartnerschaft mbB

(57) **Zusammenfassung**

Die Erfindung betrifft ein Verfahren zur Erstellung einer Sicherheitskonfiguration für eine industrielle Maschine zur Vermeidung menschlicher Verletzungen durch die Maschine, wobei das Verfahren umfasst, dass
- die Maschine, welche zumindest einen Sicherheitssensor aufweist, bereitgestellt wird, wobei die Maschine einen Gefahrenbereich aufweist,
- eine Simulation ausgeführt wird, welche einen Betrieb der Maschine zum Durchführen einer Produktionsaufgabe simuliert,

wobei die Simulation zwei Agenten umfasst, wobei ein erster der Agenten versucht, in den Gefahrenbereich der Maschine vorzudringen, und ein zweiter der Agenten versucht, durch Erstellung einer angepassten Sicherheitskonfiguration aus einer vorherigen Sicherheitskonfiguration ein Vordringen in den Gefahrenbereich zu verhindern,
wobei die Simulation iterativ ausgeführt wird, wobei für den ersten Agenten und/oder den zweiten Agenten ein Reinforcement Learning ausgeführt wird, um ein verändertes Verhalten des ersten Agenten und/oder des zweiten Agenten in weiteren Iterationen zu erhalten.

## Beschreibung

Die vorliegende Erfindung betrifft ein Verfahren zur Erstellung einer Sicherheitskonfiguration für eine industrielle Maschine, zur Vermeidung menschlicher Verletzungen durch die Maschine.

Industrielle Maschinen werden in vielfältiger Form und Ausprägung in industriellen Prozessen verwendet, um beispielsweise Produkte herzustellen, Objekte zu transportieren, zu sortieren, zu greifen und dergleichen. Bei solchen industriellen Maschinen kann es sich insbesondere um Roboter, Bearbeitungsmaschinen oder Fahrzeuge (z.B. sogenannte AGVs - Automated Guided Vehicles) handeln.

Insbesondere durch die Bewegung der industriellen Maschine selbst oder durch Bewegungen von Teilen der industriellen Maschine, beispielsweise von Roboterarmen, kann es zu einer Gefährdung von in der Nähe befindlichen Personen kommen.

Herkömmlicherweise werden industrielle Maschinen beispielsweise durch Schutzfelder abgesichert. Hierbei ist der Aufwand zur initialen Definition der Schutzfelder relativ hoch, was insbesondere auch für dreidimensionale Schutzfelder gilt. Überdies besteht der Nachteil, dass beim Eingriff einer Person in ein Schutzfeld die Maschine üblicherweise verlangsamt oder sogar ganz gestoppt wird, was der Produktivität der Maschine abträglich ist.

Es ist daher die der Erfindung zugrundeliegende Aufgabe, ein Verfahren anzugeben, welches die Absicherung einer industriellen Maschine erlaubt, welches den Aufwand zur Erstellung einer Sicherheitskonfiguration für die industrielle Maschine reduziert und/oder welches die Produktivität der industriellen Maschine erhöht.

Diese Aufgabe wird durch ein Verfahren gemäß Anspruch 1 gelöst.

Das erfindungsgemäße (computerimplementierte) Verfahren zur Erstellung einer Sicherheitskonfiguration für eine industrielle Maschine dient insbesondere zur Vermeidung menschlicher Verletzungen durch die Maschine. Dabei umfasst das Verfahren, dass
- bevorzugt die Maschine, welche zumindest einen Sicherheitssensor, insbesondere zur Erfassung der Umgebung der Maschine, aufweist, bereitgestellt wird, wobei die Maschine einen, bevorzugt veränderbaren, Gefahrenbereich aufweist, und
- eine Simulation ausgeführt wird, welche einen Betrieb der Maschine zum Durchführen einer Produktionsaufgabe simuliert.

Dabei umfasst die Simulation bevorzugt zwei Agenten, wobei ein erster der Agenten versucht, in den Gefahrenbereich der Maschine vorzudringen, und ein zweiter der Agenten versucht, durch Erstellung einer angepassten Sicherheitskonfiguration aus einer vorherigen Sicherheitskonfiguration ein Vordringen (des ersten Agenten) in den Gefahrenbereich zu verhindern. Bevorzugt wird die Simulation iterativ ausgeführt, wobei für den ersten Agenten und/oder den zweiten Agenten ein Reinforcement Learning ausgeführt wird, um ein verändertes Verhalten des ersten Agenten und/oder des zweiten Agenten in weiteren Iterationen zu erhalten. Bevorzugt wird für jeden der Agenten jeweils ein separates Reinforcement Learning ausgeführt. Weiter bevorzugt wird durch das veränderte Verhalten des zweiten Agenten die veränderte bzw. angepasste Sicherheitskonfiguration in den Iterationen erhalten.

Die Erfindung geht von der Erkenntnis aus, dass durch die Verwendung des Reinforcement Learning und der zwei als Gegenspieler ausgebildeten Agenten in der

Simulation eine Vielzahl von möglichen Sicherheitskonfigurationen durch den zweiten Agenten aufgestellt und von dem ersten Agenten auf mögliche Schwachstellen getestet werden kann. Auf diese Weise ist es möglich, nicht funktionierende Sicherheitskonfigurationen oder nicht ausreichende Sicherheitskonfigurationen zu verwerfen oder weiter zu verbessern. Im Laufe der Iterationen der Simulation können somit immer weitere angepasste Sicherheitskonfigurationen erzeugt werden, bis eine Sicherheitskonfiguration vorliegt, die für den Betrieb der industriellen Maschine geeignet ist. Die Eignung kann beispielsweise dadurch festgestellt werden, dass eine menschliche Verletzung nicht oder nur mit einer vorbestimmten Wahrscheinlichkeit auftreten kann, wobei bevorzugt zusätzlich auch eine vorbestimmte Produktivität hinsichtlich der Produktivitätsaufgabe der industriellen Maschine erfüllt wird.

Für die angepasste Sicherheitskonfiguration kann dabei die vorherige Sicherheitskonfiguration zum Teil übernommen werden, wobei ein Teil der vorherigen Sicherheitskonfiguration geändert wird, um die angepasste Sicherheitskonfiguration zu erzeugen. Ebenfalls ist es möglich, die vorherige Sicherheitskonfiguration vollständig zu verwerfen und die angepasste Sicherheitskonfiguration komplett neu zu erstellen. Eine solche vollständige Neuerstellung kann z.B. notwendig sein, wenn der erste Agent, insbesondere in mehreren Iterationen hintereinander, in den Gefahrenbereich vordringt.

Unter der Sicherheitskonfiguration können dabei Maßnahmen verstanden werden, welche getroffen werden können, um menschliche Verletzungen an der Maschine zu vermeiden oder auszuschließen. Hierunter können insbesondere das Verlangsamen von Bewegungen der Maschine, das Durchführen von Ausweichbewegungen mittels der Maschine oder das Abschalten beweglicher Teile der Maschine fallen. Ebenfalls können darunter auch die Erstellung von Schutzfeldern in der Umgebung der Maschine oder sonstige zur Vermeidung menschlicher Verletzungen geeignete Maßnahmen fallen.

Genauer gesagt ist es also durch das iterative Reinforcement Learning möglich, eine Vielzahl von denkbaren Absicherungsarten, d.h. Sicherheitskonfigurationen, zu evaluieren, so dass ein menschlicher Aufwand zur Erstellung der Sicherheitskonfiguration minimiert wird. Zudem können durch das Reinforcement Learning gänzlich neue Arten oder neue Kombinationen von Maßnahmen innerhalb der Sicherheitskonfiguration vorgeschlagen werden. Die Sicherheitskonfiguration kann dabei iterativ jeweils verändert werden, um so aus einer vorherigen Sicherheitskonfiguration eine neue Sicherheitskonfiguration zu erzeugen, die hierin auch als angepasste Sicherheitskonfiguration bezeichnet wird. Wurde eine Vielzahl von angepassten Sicherheitskonfigurationen evaluiert, so kann beispielsweise die am besten geeignete Sicherheitskonfiguration oder die nach einer vorgegebenen Anzahl von Iterationsschritten zuletzt vorliegende Sicherheitskonfiguration als finale Sicherheitskonfiguration ausgegeben werden. Die finale Sicherheitskonfiguration kann in der realen industriellen Maschine angewendet werden, wobei die reale industrielle Maschine ihr Verhalten bevorzugt anhand der finalen Sicherheitskonfiguration anpasst. Die reale industrielle Maschine kann sich dann ebenso verhalten, wie die industrielle Maschine in der Simulation. Auf diese Weise kann die in der Simulation erstellte Sicherheitskonfiguration eine Auswirkung auf die reale industrielle Maschine haben.

In diesem Zusammenhang sei klargestellt, dass im Folgenden insbesondere jeweils die Simulation gemeint ist, wenn beispielsweise von einer Bewegung der Agenten oder einer Erfassung durch den Sicherheitssensor gesprochen wird. Es versteht sich aber auch, dass die Bewegung eines Agenten beispielsweise der Bewegung einer realen Person nahe der realen industriellen Maschine entsprechen kann und dass die Erfassung durch den Sicherheitssensor ebenfalls einer realen Erfassung durch den entsprechenden realen Sicherheitssensor der realen industriellen Maschine entsprechen kann.

Bei der industriellen Maschine kann es sich, wie eingangs erwähnt, insbesondere um Roboter, Bearbeitungsmaschinen oder Fahrzeuge (z.B. sogenannte AGVs - Automated Guided Vehicles) oder Kombinationen daraus handeln.

Nachfolgend werden noch weitere Details der Erfindung erläutert.

Bei dem Sicherheitssensor kann es sich um einen Sensor zur Überwachung der Umgebung der Maschine handeln. Der Sicherheitssensor kann insbesondere ausgebildet sein, eine Person in der Umgebung der Maschine zu erkennen. Dementsprechend kann es sich bei dem Sicherheitssensor beispielsweise um einen Laserscanner, ein LiDAR, einen Ultraschallsensor, eine Kamera und dergleichen handeln.

Unter dem Gefahrenbereich ist insbesondere der Bereich zu verstehen, in dem sich ein Mensch sicher eine Verletzung zufügen würde oder in dem eine Verletzung zumindest mit einer sehr hohen Wahrscheinlichkeit, beispielsweise von mehr als 90 % oder 95 %, auftreten wird, wenn sich die Person dort aufhält und/oder wenn sich zumindest ein Körperteil dort befindet. Der Gefahrenbereich kann beispielsweise der Bereich der Position eines rotierenden Fräskopfes sein, der Schwenkbereich eines Roboterarms oder der Bereich in Fahrtrichtung vor einer als mobiles Fahrzeug ausgestalteten industriellen Maschine. Für den Gefahrenbereich kann insbesondere auch eine Worst-case-Annahme getroffen werden, daher kann darunter auch ein Bereich verstanden werden, in dem eine Verletzung zumindest möglich ist.

In der Simulation wird bevorzugt der Betrieb der industriellen Maschine simuliert, wobei der Betrieb zum Durchführen einer Produktionsaufgabe dient. Bei der Produktionsaufgabe kann es sich z.B. um das Bearbeiten von Gegenständen handeln, sofern die industrielle Maschine beispielsweise eine Bearbeitungsmaschine (wie eine Fräsmaschine oder eine Bohrmaschine) umfasst. Ebenfalls kann es sich bei der Produktionsaufgabe um ein Transportieren von Objekten (insbesondere mit automatisiert und/oder autonom fahrenden Fahrzeugen) handeln. In der Simulation kann zudem die Funktion des Sicherheitssensors simuliert werden. Überdies können neben der Maschine selbst auch eine oder mehrere Personen in der Umgebung der Maschine simuliert werden.

Insbesondere kann der erste der Agenten in der Simulation zumindest eine der Personen steuern und mit der simulierten Person versuchen, in den Gefahrenbereich der Maschine vorzudringen. Hierin wird die simulierte Person der Einfachheit halber mit dem ersten Agenten gleichgesetzt, es wird also insbesondere davon gesprochen, dass der erste Agent versucht in den Gefahrenbereich der Maschine vorzudringen.

Durch den zweiten Agenten wird bevorzugt die Sicherheitskonfiguration in der Simulation verändert und somit eine angepasste Sicherheitskonfiguration aus derjeweils vorherigen Sicherheitskonfiguration (für einen jeweiligen Iterationsschritt) erstellt. Die Sicherheitskonfiguration kann insbesondere auch die dynamische Anpassung, beispielsweise die dynamische Anpassung anhand der Bewegung des ersten Agenten und/oder der Maschine, von Schutzfeldern umfassen. Die Sicherheitskonfiguration kann auch eine Maschinenaktion, insbesondere eine Maschinenbewegung aufweisen.

Die Anpassung der Sicherheitskonfiguration erfolgt dabei insbesondere in Reaktion auf ein erfolgreiches Vordringen des ersten Agenten in den Gefahrenbereich der Maschine oder z.B. in Reaktion auf eine zu geringe Produktivität der industriellen Maschine, wie später noch genauer dargelegt wird.

Kurz gesagt, simuliert der erste Agent also die Bewegung einer Person, welche in den Gefahrenbereich eindringen soll. Der erste Agent simuliert demnach einen Angreifer, wohingegen der zweite Agent versucht durch eine entsprechende Sicherheitskonfiguration ein Vordringen des ersten Agenten in den Gefahrenbereich zu verhindern. Durch eine entsprechende Belohnung der Agenten, beispielsweise des ersten Agenten für ein erfolgreiches Vordringen in den Gefahrenbereich oder des zweiten Agenten für eine Aufrechterhaltung des Betriebs der industriellen Maschine, kann eine entsprechende Optimierung der Sicherheitskonfiguration dahingehend erreicht werden, dass eine Verletzung eines Menschen an der Maschine vermieden wird, zugleich aber die Produktivität der Maschine beibehalten wird. Die Details der Belohnung, auch *Reward* genannt, werden später noch ausgeführt.

Weiterbildungen der Erfindung sind der Beschreibung, den Zeichnungen sowie den abhängigen Ansprüchen zu entnehmen.

Gemäß einer ersten Ausführungsform umfasst die Sicherheitskonfiguration zumindest ein Set von Regeln für die Bewegung der Maschine, wobei die Regeln in Abhängigkeit der Bewegung des ersten Agenten (welcher auch als "Angreifer" gesehen werden kann) zu vorbestimmten Bewegungen, d.h. beispielsweise Verhaltensweisen, der Maschine führen, wobei für die Erstellung der angepassten Sicherheitskonfiguration bevorzugt Regeln geändert, hinzugefügt und/oder gelöscht werden. Die Regeln für die Bewegung der Maschine können beispielsweise umfassen, dass sich die Maschine ohne Einschränkungen bewegt, wenn der erste Agent (und entsprechend eine Person in der Realität) zumindest einen vorbestimmten Abstand zu der Maschine aufweist. Weiterhin können die Regeln beispielsweise umfassen, dass bei einer als mobiles Fahrzeug ausgebildeten Maschine eine Bewegung auf den ersten Agenten zu unterbunden wird, wenn der erste Agent näher als einen vorbestimmten Schwellenwert zu der Maschine ist. Ebenfalls kann es möglich sein, beispielsweise einen Roboterarm der Maschine abzubremsen, wenn der erste Agent dem Roboterarm zu nahekommt. Allgemein kann in Reaktion auf die Position und/oder Bewegung des ersten Agenten beispielsweise ein Verlangsamen, Stoppen und/oder Umfahren (d.h. ein Wählen einer anderen Bewegungsbahn, was insbesondere einen Umweg umfassen kann) erfolgen.

Zudem können die Regeln eine Abfolge von Bewegungen umfassen, die z.B. den ersten Agenten abwehren können. Auch können die Regeln Regeln für die, insbesondere gleichzeitige oder synchronisierte, Bewegung von mehreren verschiedenen Teilen der Maschine umfassen.

Für das Anpassen der Sicherheitskonfiguration können die Regeln bevorzugt derart geändert werden bzw. es werden neue Regeln hinzugefügt oder bestehende Regeln gelöscht, dass ein Vordringen des ersten Agenten in den Gefahrenbereich zu verhindern oder z.B. die Produktivität der Maschine im Vergleich zu den bisher bestehenden Regeln zu erhöhen.

Die Änderung der Regeln kann das "Lernen" durch das Reinforcement Learning widerspiegeln und/oder allgemein ein Ausprobieren von verschiedenen Möglichkeiten sein.

Grundsätzlich umfasst die Maschine (in der Simulation und auch in der Realität) zumindest einen Teil, welcher bewegt wird. Eine Bewegung ist dabei derart zu verstehen, dass z.B. eine Bewegung eines Roboterarms, ein Verfahren der Maschine als Ganzes oder auch das Antreiben bzw. Rotieren eines Werkzeugs damit gemeint ist.

Gemäß einer weiteren Ausführungsform wird der Gefahrenbereich der Maschine in der Simulation in Abhängigkeit der Bewegungen der Maschine angepasst, wobei bei einem Stillstand der Maschine der Gefahrenbereich bevorzugt entfällt. Durch die Bewegung der Maschine kann der Gefahrenbereich an einen anderen Ort versetzt werden, bei einer Bewegung mit höherer Geschwindigkeit kann der Gefahrenbereich vergrößert und bei einer Bewegung mit verringerter Geschwindigkeit kann der Gefahrenbereich verkleinert werden. Bei einem völligen Stillstand der Maschine geht üblicherweise keine Gefahr mehr von der Maschine aus, so dass in diesem Fall der Gefahrenbereich entfallen kann. Dann ist es zwar nicht mehr möglich, dass der erste Agent in den Gefahrenbereich vordringt, jedoch sinkt die Produktivität der Maschine dann ebenfalls auf Null, so dass ein dauerhafter Verbleib in diesem Zustand unerwünscht ist und - wie später erläutert - durch entsprechende Wahl der Belohnung für die Agenten verhindert werden kann.

Gemäß einer weiteren Ausführungsform umfasst die Sicherheitskonfiguration zumindest ein Schutzfeld in der Umgebung der Maschine, wobei eine Schutzfeldverletzung durch den ersten Agenten zu einem vorbestimmten Verhalten, beispielsweise einer Bewegung, einer sicherheitsgerichteten Aktion und/oder einer Änderung des Schutzfelds oder dergleichen, der Maschine führt, wobei für die Erstellung der angepassten Sicherheitskonfiguration bevorzugt ein bestehendes Schutzfeld geändert und/oder gelöscht wird und/oder ein Schutzfeld hinzugefügt wird.

Anders ausgedrückt kann die Sicherheitskonfiguration also ein oder mehrere Schutzfelder umfassen, um sicherzustellen, dass der erste Agent nicht in den Gefahrenbereich vordringen kann. Die Schutzfelder einer jeweiligen Sicherheitskonfiguration können dabei fest vorgegeben sein oder innerhalb der Sicherheitskonfiguration selbst wiederum dynamisch sein, und sich beispielsweise an eine Position und/oder Geschwindigkeit des ersten Agenten und/oder der Maschine anpassen. Ebenfalls ist es möglich, innerhalb einer Sicherheitskonfiguration zwischen verschiedenen Sätzen von Schutzfeldern umzuschalten. Die verschiedenen Sätze von Schutzfeldern können dabei gelernt oder im Vorhinein vorgegeben sein. Das Umschalten zwischen verschiedenen Sätzen von Schutzfeldern wird als ein Sonderfall dynamischer Schutzfelder bezeichnet. Dabei sind die Schutzfelder eines Satzes in sich dann nicht veränderbar, es kann aber zwischen Schutzfeldern verschiedener Sätze umgeschaltet werden.

Das Schutzfeld oder die Schutzfelder können beispielsweise durch den Sicherheitssensor (in der Simulation und auch in der Realität) überwacht werden. Zu jedem Schutzfeld kann zudem eine sicherheitsgerichtete Maßnahme definiert sein, welche bei einer Schutzfeldverletzung ausgeführt wird. So ist es beispielsweise möglich, dass die Maschine eine Bewegung verlangsamt, stoppt oder in eine andere Bewegungsbahn umleitet, wenn eine Schutzfeldverletzung erkannt wird. Auf diese Weise kann der Gefahrenbereich verkleinert und/oder von dem ersten Agenten wegbewegt werden und/oder zumindest zeitweilig komplett entfallen.

Weiterhin ist es möglich, dass die Sicherheitskonfiguration eine logische und/oder zeitliche Verknüpfung von Ereignissen in Schutzfeldern mit Bewegungen oder Aktionen (z.B. sicherheitsgerichteten Maßnahmen) der Maschine umfasst. Beispielsweise kann eine bestimmte sicherheitsgerichtete Maßnahme nur dann ausgeführt werden, wenn zwei Schutzfelder gleichzeitig verletzt werden (logische UND-Verknüpfung) und/oder wenn dasselbe Schutzfeld innerhalb einer vorgegebenen Zeitdauer mehrmals verletzt wird (zeitliche Verknüpfung).

Wenn der erste Agent allerdings trotz der Schutzfelder den Gefahrenbereich erreicht, so ist offensichtlich, dass die bisherigen Schutzfelder der momentanen Sicherheitskonfiguration nicht ausreichen und es kann eine Veränderung der Schutzfelder in der nächsten Sicherheitskonfiguration, d.h. bei der Erstellung der angepassten Sicherheitskonfiguration, vorgenommen werden. Mit den Schutzfeldern der angepassten Sicherheitskonfiguration wird dann erneut überprüft, ob der erste Agent in den Gefahrenbereich vordringen kann. Ebenfalls kann eine Änderung der Schutzfelder in der angepassten Sicherheitskonfiguration vorgenommen werden, wenn die Schutzfelder beispielsweise zu groß sind und damit die Produktivität der Maschine zu stark und/oder zu früh einschränken.

In der Simulation wird eine Schutzfeldverletzung bevorzugt durch simulierte Daten des Sicherheitssensors ermittelt. Es können auch (in der Simulation und auch in der Realität) weitere Sicherheitssensoren hinzugefügt werden, um weitere Schutzfelder, auch an räumlich unterschiedlichen Orten, aufspannen zu können.

Gemäß einer weiteren Ausführungsform wird der erste Agent als punktförmig oder als Körpermodell simuliert, wobei das Körpermodell bevorzugt eine separate Bewegung von Körperteilen ermöglicht. Eine punktförmige Simulation des ersten Agenten besitzt den Vorteil, dass die Simulation mit wenig Aufwand durchzuführen ist. Die Position des punktförmigen Agenten kann dabei z.B. die Position einer Person (also insbesondere deren Standpunkt) oder die Position einer Gliedmaße der Person, z.B. einer Hand, des Kopfes oder eines Beins, repräsentieren.

Durch die Verwendung eines Körpermodells kann die Simulation genauer und mit mehr Details erfolgen. So kann das Körpermodell mehrere Körperteile umfassen, beispielsweise einen Kopf, zumindest einen Arm, eine Hand und/oder Beine. Das Körpermodell kann die Simulation von separaten Bewegungen dieser Körperteile ermöglichen. Auf diese Weise kann beispielsweise simuliert werden, dass der erste Agent seine Hand in Richtung des Gefahrenbereichs ausstreckt. Der zweite Agent (welcher auch als Verteidiger gesehen werden kann) kann hierauf anders reagieren, als wenn sich der erste Agent nur in der Nähe der Maschine befindet, aber die Hand nicht ausstreckt. So können für den Fall des Ausstreckens in der Sicherheitskonfiguration wiederum Regeln hinterlegt sein, die erst dann eine bestimmte Bewegung oder Aktion der Maschine hervorrufen, wenn sich die Hand zu nahe am Gefahrenbereich befindet. Somit kann die Sicherheitskonfiguration noch feiner auf die Aktionen des ersten Agenten abgestimmt werden.

Um die Simulation nicht zu komplex zu gestalten, kann jedes Körperteil des Körpermodells durch eine maximale Anzahl von Punkten in der Simulation repräsentiert sein. Die maximale Anzahl von Punkten kann beispielsweise 30, 20, zehn, acht, sechs, vier oder zwei sein. So ist es beispielsweise möglich, einen Arm durch zwei Punkte zu simulieren, wohingegen eine Hand beispielsweise mit zwei Punkten (bei einem rudimentären Handmodell) oder mit sechs Punkten (ein Punkt für die Handwurzel und ein Punkt für jeden Finger; bei einem detaillierteren Handmodell) simuliert werden kann.

Gemäß einer weiteren Ausführungsform umfasst die Sicherheitskonfiguration unterschiedliche Schutzfelder und/oder unterschiedliche Regeln für die Bewegung der Maschine, welche in Abhängigkeit einer Körperhaltung des ersten Agenten aktiviert werden. Unter der Körperhaltung ist insbesondere die Position und/oder Ausrichtung der Körperteile des Körpermodells des ersten Agenten zu verstehen. Für den zweiten Agenten können sich aus der Körperhaltung wichtige Signale ergeben, welche Bewegung des ersten Agenten als nächstes zu erwarten sein kann. Je nachdem, ob der erste Agent beispielsweise am Boden liegt, der Maschine zugewandt ist oder die Arme nach vorne gestreckt hat, kann von dem zweiten Agenten unterschiedlich reagiert werden, beispielsweise durch Anpassung der Bewegungen der Maschine oder der Schutzfelder in einer Sicherheitskonfiguration.

Gemäß einer weiteren Ausführungsform umfasst der erste Agent mehrere separat voneinander agierende Entitäten, welche bevorzugt kollaborativ versuchen, dass zumindest eine Entität in den Gefahrenbereich der Maschine vordringt. Die Entitäten können insbesondere alle identisch sein und, beispielsweise wie oben ausgeführt, als Punktmodell oder als Körpermodell simuliert werden. Es können auch verschiedene Entitäten gemischt sein. Jede Entität kann bevorzugt eine separate Person simulieren. Separat voneinander agieren kann insbesondere bedeuten, dass die Entitäten (wie reale Personen) unabhängig voneinander bewegt werden können, aber trotzdem zusammenarbeiten, also abgestimmt versuchen, in den Gefahrenbereich vorzudringen.

Beispielsweise können die mehreren separat voneinander agierenden Entitäten derart kollaborieren, um einen Hintertretschutz zu unterlaufen, indem beispielsweise eine Entität eine Sicherheitstür schließt, während eine andere Entität sich noch im durch die Sicherheitstür geschützten Raum der Maschine befindet. Durch das Schließen der Sicherheitstür kann die Maschine dann wieder anlaufen, wodurch der durch die Sicherheitstür geschützte Raum der Maschine dann zum Gefahrenbereich wird und die andere Entität somit in den Gefahrenbereich vorgedrungen ist. Ein solches Szenario könnte in der Realität zu schweren Verletzungen der Person im Gefahrenbereich führen. Durch die Simulation einer solchen Strategie können aber auch Gegenmaßnahmen gegen mehrere kollaborierende Entitäten gefunden werden.

Bevorzugt ermöglicht es die Simulation, dass der erste Agent mit Teilen der Maschine wechselwirkt und/oder Teile der Maschine bewegt oder verändert. Die in der Simulation ermöglichte Wechselwirkung, Bewegung und/oder Veränderung kann zumindest zum Teil dem entsprechen, was in der Realität ebenfalls möglich ist. Beispielsweise kann die Simulation umfassen, dass - wie oben erwähnt - eine Sicherheitstür der Maschine geöffnet wird, was dann auch in der Simulation zu dem üblicherweise vorgesehenen Verhalten führt, dass diejenigen Teile der Maschine, welche durch die Sicherheitstür geschützt sind, ihren Betrieb einstellen, solange die Sicherheitstür geöffnet ist. Ebenfalls kann die Simulation umfassen, dass Werkstücke oder Umgebungsobjekte von dem ersten Agenten bewegt oder auf andere Weise benutzt werden können, beispielsweise um die Sicherheitskonfiguration zu umgehen und in den Gefahrenbereich vorzudringen.

Gemäß einer weiteren Ausführungsform kennt der erste Agent die Sicherheitskonfiguration. Der Agent kann also die jeweils gerade geltende Sicherheitskonfiguration kennen, d.h. dem ersten Agenten sind z.B. die Schutzfelder und/oder die Regeln zur Bewegung der Maschine bekannt. Auf diese Weise kann in weniger Iterationsschritten zu einer sinnvollen Sicherheitskonfiguration gelangt werden, da der erste Agent nicht jeweils noch lernen muss, wo sich Schutzfelder und dergleichen befinden.

Es ist aber auch möglich, dass der erste Agent die Sicherheitskonfiguration nicht kennt, zumindest für einen Teil der Iterationen, und dann über Erfolg und Misserfolg lernen muss, wie die Maschine reagiert bzw. wo sich Schutzfelder befinden können. Dass der erste Agent die Sicherheitskonfiguration nicht kennt, kann insbesondere dann der Fall sein, wenn schon eine vorbestimmte Anzahl von Iterationen mit bekannter Sicherheitskonfiguration durchlaufen wurde, um eine Sicherheitskonfiguration mit noch weiteren Aktionen des ersten Agenten zu testen. Das Verhalten des ersten Agenten ohne Kenntnis der Sicherheitskonfiguration kann dabei eher dem Verhalten eines Menschen in der Realität entsprechen, welcher ebenfalls die genaue Sicherheitskonfiguration nicht kennt.

Gemäß einer weiteren Ausführungsform hat der zweite Agent lediglich Daten des Sicherheitssensors zur Verfügung. Dies bedeutet, der zweite Agent kann die Position und/oder Körperhaltung des ersten Agenten lediglich im Erfassungsbereich des Sicherheitssensors zur Verfügung haben. Dies entspricht wiederum den realen Bedingungen, in welchen der zweite Agent eine Person auch nur erfassen kann, wenn sie sich im Erfassungsbereich des Sicherheitssensors befindet.

In diesem Zusammenhang sei erwähnt, dass der Sicherheitssensor auch mehrere, insbesondere verschiedene, Einzelsensoren umfassen kann, die auch an unterschiedlichen Orten angebracht sein können.

Ebenfalls ist es möglich, dass der zweite Agent, zumindest für einen Teil der Iterationen der Simulation, immer die Positionen bzw. Körperhaltungen des ersten Agenten (und aller Entitäten) kennt.

Bevorzugt können die Iterationen insbesondere damit starten, dass der zweite Agent immer die Positionen und Körperhaltungen des ersten Agenten kennt. Nach einer vorbestimmten Anzahl von Iterationen oder nach einer vorbestimmten Anzahl von Iterationen, in welchen der erste Agent nicht in den Gefahrenbereich vordringen konnte, können dann Iterationen erfolgen, in welchen der zweite Agent lediglich die Daten des Sicherheitssensors zur Verfügung hat.

Unter den Daten des Sicherheitssensors können insbesondere sämtliche der Maschine zur Verfügung stehenden Sensordaten zu verstehen sein. Insbesondere können auch Sensoren, die beispielsweise der Erfassung von Werkstücken in der Maschine dienen, als Sicherheitssensoren verwendet werden und dementsprechend die Datengrundlage bilden, um den ersten Agenten abzuwehren.

Allgemein können die Agenten zumindest in einem Teil der Iterationen ihre Umgebung also vollständig kennen. In weiteren Iterationen kann dann die Realität besser abgebildet werden, in welcher dieses absolute Wissen nicht vorhanden ist, so dass die Agenten jeweils nur einen Teileinblick besitzen, was zu realistischeren Szenarien führen kann. Insbesondere die Funktion von Sensoren kann dabei in der Simulation nachgestellt werden, oder sie wird simuliert.

Gemäß einer weiteren Ausführungsform umfasst das Reinforcement Learning eine Belohnung für die Agenten, wobei die Belohnung für den ersten Agenten und für den zweiten Agenten unterschiedlich ist und/oder unterschiedliches Verhalten der Agenten belohnt. Insbesondere erhält der erste Agent eine Belohnung für das Vordringen in den Gefahrenbereich und/oder erhält der zweite Agent eine Belohnung für das Durchführen der Produktionsaufgabe. Wie für das Reinforcement Learning später noch genauer ausgeführt wird, streben die Agenten insbesondere danach, eine möglichst hohe Belohnung zu erhalten. Die Belohnung für den ersten Agenten und die Belohnung für den zweiten Agenten ist insbesondere derart gewählt, dass sie einander widersprechendes Verhalten belohnen. Schafft der erste Agent es, in den Gefahrenbereich vorzudringen, so würde dies üblicherweise zu einem Stopp der Maschine und damit zu einem Stopp der Produktionsaufgabe führen. Der zweite Agent hingegen versucht, die Produktionsaufgabe durchzuführen und muss dazu Störungen durch den ersten Agenten möglichst minimieren. Der erste und der zweite Agent sind dadurch Gegenspieler.

Es ist auch möglich, dass der zweite Agent eine Belohnung dafür erhält, den ersten Agenten an dem Vordringen in den Gefahrenbereich zu hindern. Üblicherweise wird eine solche Belohnung aber mit einer Belohnung für das Durchführen der Produktionsaufgabe kombiniert, um den zweiten Agenten daran zu hindern, die Maschine einfach dauerhaft abzuschalten oder einfach ein die gesamte Umgebung der Maschine umfassendes Schutzfeld zu erzeugen, was dann jeweils zu einem Stillstand in der Produktionsaufgabe führen würde.

Gemäß einer weiteren Ausführungsform wird die Belohnung für den ersten Agenten bei Untätigkeit des ersten Agenten und/oder bei Auslösen eines Schutzfelds reduziert. Allgemein kann die Belohnung für den ersten Agenten auch beim Auslösen einer Sicherheitsmaßnahme der Maschine reduziert werden. Das Reduzieren der Belohnung bei Untätigkeit, also eine Bestrafung bei Untätigkeit, kann einem Verhalten des ersten Agenten vorbeugen, bei welchem der erste Agent lediglich abwartet. Dann könnte in dem Reinforcement Learning keine sinnvolle Sicherheitskonfiguration erzeugt werden. Durch die Bestrafung beim Auslösen eines Schutzfelds oder allgemein beim Auslösen einer Sicherheitsmaßnahme kann der erste Agent lernen, wo sich Schutzfelder befinden und/oder wie Sicherheitsmaßnahmen der Maschine wirken. Dies ist insbesondere dann relevant, wenn der erste Agent die Sicherheitskonfiguration nicht kennt. Überdies kann damit bewirkt werden, dass der erste Agent zielgerichteter versucht, den Gefahrenbereich zu erreichen und nicht auf eine Verteidigung der Maschine "hereinfällt".

Gemäß einer weiteren Ausführungsform hängt die Belohnung für den zweiten Agenten von einer Dauer der Durchführung der Produktionsaufgabe und/oder von einer Effektivität der Durchführung der Produktionsaufgabe ab. Die Effektivität der Produktionsaufgabe kann beispielsweise angeben, wie viele Teile die Maschine pro Zeiteinheit verarbeitet, also z.B. produziert, transportiert oder verteilt. Bei höherer Produktivität, also insbesondere bei längerer Dauer der Durchführung der Produktionsaufgabe, wobei zugleich während der Dauer der Durchführung eine gewisse Effektivität vorherrscht, kann die Belohnung höher ausfallen. Eine höhere Produktivität wird also belohnt.

Insbesondere wird der zweite Agent dafür belohnt, dass die Maschine möglichst lange Laufzeiten hat. Neben einem Stillsetzen der Maschine kann eine Prozessverlangsamung und/oder ein Umschalten auf andere, beispielsweise ausweichende, Arbeitswege Teil der Sicherheitskonfiguration sein. Beispielsweise kann die höchste Belohnung für eine maximale Geschwindigkeit der Durchführung der Produktionsaufgabe erhalten werden, nicht nur für eine bloße Laufzeit der Produktionsaufgabe.

Ebenfalls ist es möglich, dass die Belohnung des ersten Agenten direkt negativ mit der Belohnung des zweiten Agenten korreliert und umgekehrt. Insbesondere kann, beispielsweise pro Iteration, eine vorgegebene Belohnung (beispielsweise eine Anzahl von Punkten) auf den ersten Agenten und den zweiten Agenten aufgeteilt werden. Schafft es der zweite Agent beispielsweise nicht, einen ausreichend hohen Durchsatz bei der Produktionsaufgabe aufrechtzuerhalten, so erhält der erste Agent dann eine höhere Belohnung und der zweite Agent eine niedrigere Belohnung.

Überdies ist es möglich, die Belohnung des zweiten Agenten beispielsweise an die Größe und/oder die "Footprints" der aufgespannten Schutzfelder zu koppeln. Eine kleinere Größe der Schutzfelder ermöglicht dabei mehr Flexibilität und kann dementsprechend mit einer höheren Belohnung einhergehen. Die Größe der Schutzfelder kann dabei die überspannte Fläche der Schutzfelder oder das von den Schutzfeldern überwachte Volumen sein.

Gemäß einer weiteren Ausführungsform umfasst die Maschine einen Kollaborationsbereich. In dem Kollaborationsbereich kann insbesondere eine Übergabe von Werkstücken zwischen der Maschine und dem ersten Agenten (bzw. einer Person in der realen Welt) erfolgen. Ebenfalls kann ein gemeinsames Bearbeiten eines Werkstücks erfolgen. Bevorzugt erhalten der erste Agent und/oder der zweite Agent eine Belohnung für eine erfolgreiche Kooperation des ersten Agenten und der Maschine in dem Kollaborationsbereich. Beispielsweise kann eine Belohnung jeweils dafür erfolgen, dass ein Werkstück erfolgreich in dem Kollaborationsbereich übergeben wurde. Alternativ oder zusätzlich kann eine Belohnung für die Agenten erfolgen, wenn dem jeweils anderen Agenten für zumindest eine gewisse Zeitspanne Zugang zu dem Kollaborationsbereich ermöglicht wurde, wobei der Zugang z.B. dadurch ermöglicht wird, dass sich der erste Agent oder die Maschine zumindest eine vorgegebene Entfernung von dem Kollaborationsbereich entfernt befinden.

Die über den Kollaborationsbereich erzielbare Belohnung für den ersten und/oder zweiten Agenten kann insbesondere niedriger sein als eine Belohnung des ersten Agenten, die durch ein erfolgreiches Vordringen in den Gefahrenbereich erzielt wird und/oder als eine Belohnung für den zweiten Agenten, die durch ein erfolgreiches Durchführen der Produktionsaufgabe erzielt wird. Auf diese Weise kann insbesondere der erste Agent weiterhin versuchen, in den Gefahrenbereich vorzudringen, und der zweite Agent muss die Sicherheitskonfiguration weiterhin so auslegen, dass auch bei einer Zusammenarbeit im Kollaborationsbereich nicht die Gefahr besteht, dass der erste Agent in den Gefahrenbereich vordringt.

Der Kollaborationsbereich kann insbesondere durch bauliche Maßnahmen der Maschine vor einem zu einfachen Vordringen des ersten Agenten in den Gefahrenbereich geschützt sein. Beispielsweise kann der Kollaborationsbereich eine als Fenster ausgebildete Durchreiche umfassen, wobei auf einer Seite der Durchreiche ein beweglicher Teil der Maschine (beispielsweise ein Roboterarm) vorgesehen ist und sich der erste Agent lediglich auf der anderen Seite der Durchreiche aufhalten kann. Auf diese Weise kann es lediglich notwendig sein, dass der zweite Agent in der Sicherheitskonfiguration Maßnahmen dagegen treffen muss, dass der erste Agent z.B. eine Hand durch die Durchreiche hindurchstreckt, wenn sich der Gefahrenbereich gerade nahe der Durchreiche befindet.

Bevorzugt werden verschiedene der vorstehenden Belohnungen miteinander kombiniert. Insbesondere werden die verschiedenen Belohnungen unterschiedlich gewichtet. Durch eine unterschiedliche Gewichtung kann ein unterschiedliches Resultat für die Sicherheitskonfiguration bzw. die finale Sicherheitskonfiguration erzielt werden. So kann beispielsweise bei einer höheren Gewichtung der Dauer der Laufzeit der Produktionsaufgabe erreicht werden, dass weniger Unterbrechungen stattfinden, wohingegen z.B. bei einer höheren Gewichtung einer erfolgreichen Zusammenarbeit im Kollaborationsbereich gegebenenfalls häufiger Unterbrechungen der Produktionsaufgabe auftreten, dafür aber die Zusammenarbeit im Kollaborationsbereich besser möglich ist.

Gemäß einer weiteren Ausführungsform umfasst das iterative Ausführen der Simulation, dass für eine, insbesondere vorbestimmte, Anzahl von Iterationen jeweils nur ein Reinforcement Learning eines der Agenten durchgeführt wird, wobei danach, insbesondere wiederum für eine vorbestimmte Anzahl von Iterationen, dann nur ein Reinforcement Learning des anderen der Agenten durchgeführt wird. Insbesondere kann ein Reinforcement Learning der Agenten somit abwechselnd durchgeführt werden, wobei ein jeweiliger Agent dann jeweils mehrere Iterationen zur Verfügung hat, um z.B. das Vordringen in den Gefahrenbereich zu schaffen oder den ersten Agenten erfolgreich abzuwehren.

Ein abwechselndes Reinforcement Learning für die Agenten kann den Rechenaufwand bis zur Erreichung der finalen Sicherheitskonfiguration reduzieren, da dadurch die Anzahl der Iterationen reduziert und/oder die Komplexität der Iterationen reduziert werden können. Wird beispielsweise mit einem Reinforcement Learning für den ersten Agenten gestartet, so muss der zweite Agent dann nicht auf noch unvollständige Angriffe des ersten Agenten reagieren, wodurch Rechenaufwand eingespart werden kann. Anders ausgedrückt wird also der Suchraum begrenzt, wenn erster und zweiter Agent nicht simultan, sondern nacheinander bzw. versetzt trainiert werden. Beispielsweise kann also der erste Agent zunächst mit einer fest vorgegebenen Sicherheitskonfiguration konfrontiert werden. Erst wenn der erste Agent in der Lage ist, die vorgegebene Sicherheitskonfiguration zu überwinden, wird das Reinforcement Learning des zweiten Agenten ausgeführt, um durch die Erstellung einer angepassten Sicherheitskonfiguration das Vordringen des ersten Agenten in den Gefahrenbereich wiederum zu verhindern. Ein solches Vorgehen ist iterativ wiederholbar, insbesondere bis es dem ersten Agenten nicht mehr gelingt, in den Gefahrenbereich vorzudringen. Die dann vorliegende Sicherheitskonfiguration kann dann als die finale Sicherheitskonfiguration angesehen und an die reale Maschine ausgegeben werden.

Allgemein kann die finale Sicherheitskonfiguration auch dann vorliegen, wenn es dem ersten Agenten in einer vorbestimmten Anzahl von Iterationen nicht gelingt, in den Gefahrenbereich vorzudringen und/oder wenn die Maschine in der Lage ist, die Produktivitätsaufgabe ausreichend gut zu erfüllen, was z.B. durch einen Produktivitätsschwellenwert bestimmt sein kann.

Im Folgenden werden noch einige Details zum Reinforcement Learning und zu der Simulation genannt.

Das Reinforcement Learning ist eine Methode des maschinellen Lernens, deren Ziel es ist, durch Maximieren einer Belohnung eine künstliche Intelligenz zu trainieren bzw. ein Verhalten, ein Regelwerk und/oder eine Policy zu erlernen. Hierbei interagieren der erste Agent und der zweite Agent mit ihrer Umgebung, indem sie verschiedene Handlungen ausprobieren. Wie oben beschrieben, kann ein Agent für eine für ihn positive Handlung belohnt werden, wohingegen er für eine für ihn negative Handlung indirekt bestraft wird, indem die Belohnung reduziert wird oder entfällt. Aus dieser Erfahrung lernen der erste und der zweite Agent, welche Aktionen vorteilhaft sind und welche nicht. Auf diese Weise kann der erste Agent also z.B. seine Bewegungen anpassen, um erfolgreich in den Gefahrenbereich vorzudringen, wohingegen der zweite Agent die Sicherheitskonfiguration immer weiter verbessern kann, um ein Vordringen des ersten Agenten in den Gefahrenbereich zu verhindern, aber gleichzeitig die Produktionsaufgabe erfüllt wird. Das Lernen kann dabei insbesondere rekursiv erfolgen, d.h. das Lernen des ersten und zweiten Agenten können jeweils auf den Erfahrungen vorheriger Iterationen aufbauen.

Allgemein wird für Reinforcement Learning ein Zustandsraum, d.h. ein State Space, definiert, der die möglichen Situationen umfasst, in denen sich ein Agent befinden kann. Der Zustandsraum wird in der hier vorliegenden Offenbarung durch die Simulation gebildet. Ein momentaner Zustand der Simulation kann insbesondere alle Informationen enthalten, die notwendig sind, um Aktionen des ersten und/oder zweiten Agenten abzuleiten. Die Simulation kann zudem einen Aktionsraum, d.h. einen Action Space, umfassen, welcher die Möglichkeiten angibt, die der erste und/oder der zweite Agent in einem bestimmten Zustand ausführen kann. Befindet sich der erste Agent beispielsweise neben einer Wand, so umfasst der Aktionsraum lediglich die Möglichkeiten, den ersten Agenten weiter von der Wand weg zu bewegen, nicht aber die Möglichkeit, ihn durch die Wand hindurchzubewegen. In entsprechender Weise kann der Aktionsraum für den zweiten Agenten, welcher ein Schutzfeld bereits auf die durch den Sicherheitssensor maximal zulässige Größe erweitert hat, eine Anpassung des Schutzfelds lediglich dahingehend zulassen, dass das Schutzfeld wieder verkleinert wird.

Durch das Reinforcement Learning wird von den Agenten üblicherweise eine Strategie gelernt, welche auch Policy genannt wird. In der hier vorliegenden Offenbarung ist die Strategie des zweiten Agenten in der Sicherheitskonfiguration abgebildet. Die Strategie des ersten Agenten kann die situationsabhängigen und/oder zustandsabhängigen Bewegungen oder Bewegungsmuster umfassen, die es dem ersten Agenten gestatten, in den Gefahrenbereich vorzudringen.

Das Lernen für das Reinforcement Learning kann beispielsweise durch Deep Q-Networks (DQN), durch Proximal Policy Optimization (PPO), durch Soft Actor-Critic (SAC) und/oder durch Actor-Critic-Modelle (wie A3C oder A2C) erfolgen.

Die Simulation kann in diskreten Schritten oder kontinuierlich erfolgen. Erfolgt die Simulation in diskreten Schritten, so kann insbesondere das DQN verwendet werden, welches gute Ergebnisse für diskrete Aktionen erzielt, insbesondere wenn der Zustandsraum groß ist. Für kontinuierliche Simulationen kann PPO gewählt werden, ebenso wie SAC, welches gute Explorationseigenschaften aufweist und somit die Evaluierung neuer Strategien verbessert. Aktor-Critic-Modelle können insbesondere dann eingesetzt werden, wenn der erste Agent und der zweite Agent gleichzeitig oder parallel zueinander das Reinforcement Learning durchführen. Für das Reinforcement Learning kann insbesondere für jeden der Agenten ein separates künstliches neuronales Netz vorhanden sein, welches durch das Lernen der Agenten angepasst wird, beispielsweise indem Gewichte in den einzelnen Neuronen der Netze angepasst werden.

Beispielsweise kann das neuronale Netz ein Input-Layer umfassen, in welches die dem ersten oder zweiten Agenten jeweils zur Verfügung stehenden Daten eingegeben werden. Daraufhin können mehrere Hidden Layer folgen, welche eine Ausgabe produzieren, die durch ein Output-Layer an die Simulation zurückgegeben wird. Die Ausgabe kann beispielsweise Aktionen des ersten Agenten oder eine Veränderung der Sicherheitskonfiguration umfassen.

Im Falle eines Actor-Critic-Modells können die Hidden-Layer jeweils in ein Actor-Netzwerk und ein Critic-Netzwerk aufgeteilt sein.

Generell können die künstlichen neuronalen Netze als Fully-Connected oder als Convolutional Neural Networks ausgebildet sein.

Konkret können beispielsweise in dem Input-Layer genauso viele Neuronen vorhanden sein, wie Eingabewerte. Beispielsweise können 100 Neuronen vorhanden sein, sofern in der Simulation z.B. für den zweiten Agenten 100 Eingabewerte zur Verfügung stehen, welche beispielsweise von dem Sicherheitssensor in verschiedenen Bereichen gemessene Geschwindigkeiten, Abstände und dergleichen umfassen. Das Output-Layer kann beispielsweise ebenfalls 100 Neuronen umfassen, die entsprechende Werte in der Sicherheitskonfiguration neu setzen. Für den ersten Agenten kann das Output-Layer aber auch beispielsweise nur vier Neuronen umfassen, insbesondere wenn der erste Agent punktförmig simuliert wird, wobei nur vier mögliche Aktionen ausgegeben werden können, beispielsweise eine Bewegung vorwärts, rückwärts, links oder rechts.

Rein beispielhaft sei für DQN erläutert, dass das Deep Q-Network eine Q-Wert-Funktion berechnet, die schätzt, wie lohnenswert es für den jeweiligen Agenten ist, eine Aktion in dem momentanen Zustand der Simulation auszuführen. Das Lernen kann dabei dergestalt erfolgen, dass die Berechnung versucht, eine Verlustfunktion zu minimieren.

Insbesondere kann die Simulation eine Umgebung der industriellen Maschine beinhalten, die den Agenten realistische Handlungen, welche möglichen Handlungen in der Realität entsprechen, ermöglicht.

Die Simulation kann insbesondere in Umgebungen wie Nvidia Omniverse oder Unity erfolgen, wobei solche Umgebungen es ermöglichen, Sensoren, industrielle Umgebungen, Roboter und/oder Personen nachzustellen. Alternativ oder zusätzlich ist es möglich, die Simulation in OpenAI Gym durchzuführen, insbesondere mit einer Erweiterung für Adversarial Reinforcement Learning. Weitere Alternativen oder Zusätze für die Durchführung der Simulation sind Mujoco oder Bullet Physics.

Das hierin erläuterte Verfahren kann insbesondere auf einer elektronischen Recheneinrichtung ausgeführt werden. Für das Reinforcement Learning kann insbesondere eine GPU- oder TPU-basierte Hardware verwendet werden (Graphics Processing Unit oder Tensor Processing Unit). Die Recheneinrichtung kann insbesondere Frameworks wie PyTorch, TensorFlow und/oder Stable-Baselines3 verwenden.

Bevorzugt können die Daten, auf welchen die Simulation basiert, und insbesondere die in der Simulation verwendeten Daten der industriellen Maschine aus Messungen an einer realen industriellen Maschine aus Computerzeichnungen (CAD-Zeichnungen) der realen industriellen Maschine, aus Steuer- und/oder Bewegungsdaten aus einer realen Maschinensteuerung der realen Maschine und dergleichen mehr stammen.

Die Simulation kann beispielsweise zweidimensional erfolgen und die Maschine und den ersten Agenten beispielsweise aus einer Vogelperspektive darstellen. Ebenfalls ist aber auch eine dreidimensionale Simulation möglich, um beispielsweise ein Aufstehen oder Ducken des ersten Agenten in der Simulation berücksichtigen zu können. Die Simulation kann in beiden Fällen zeitdiskret, beispielsweise in Zeitschritten von 0,1 Sekunden, 0,5 Sekunden oder einer Sekunde erfolgen. Ebenfalls ist eine kontinuierliche Simulation möglich. Es ist möglich, eine Iteration dann zu beenden, wenn beispielsweise der erste Agent es geschafft hat, in den Gefahrenbereich vorzudringen oder wenn der erste Agent eine sicherheitsgerichtete Funktion der industriellen Maschine ausgelöst hat.

Eine Iteration in der Simulation kann alternativ oder zusätzlich eine vorbestimmte Zeitdauer dauern, beispielsweise wird in einer Iteration eine Zeitdauer von einer Minute, fünf Minuten oder zehn Minuten simuliert, wobei die Iteration nach Erreichen der vorbestimmten Zeitdauer beendet wird.

In jeder Iteration, insbesondere am Ende jeder Iteration kann durch eine Beobachtungseinheit, auch Interpreter genannt, der jeweilige Zustand der Simulation beurteilt werden. Die Beobachtungseinheit kann dann basierend auf dem Zustand die Belohnung an den ersten Agenten und/oder den zweiten Agenten festlegen.

Gemäß einer weiteren Ausführungsform sind in der Simulation in der Umgebung der Maschine statische und/oder dynamische Umgebungsobjekte vorhanden, welche bevorzugt von dem ersten und/oder zweiten Agenten genutzt werden. Beispielsweise kann der erste Agent ein Umgebungsobjekt benutzen, um sich vor einer Erfassung durch den Sicherheitssensor der Maschine zu schützen. Ebenfalls ist es möglich, dass z.B. eine als AGV ausgebildete Maschine einen Umweg um ein Hindernis herum wählt, wobei das Hindernis dann den ersten Agenten davon abhält, sich dem AGV in den Weg zu stellen.

Weiterer Gegenstand der Erfindung ist ein System zur Erstellung einer Sicherheitskonfiguration für eine industrielle Maschine, umfassend bevorzugt die industrielle Maschine und eine elektronische Recheneinrichtung, wobei die Maschine zumindest einen Sicherheitssensor aufweist, wobei die Maschine einen Gefahrenbereich aufweist. Die elektronische Recheneinrichtung führt eine Simulation aus, welche einen Betrieb der Maschine zum Durchführen einer Produktionsaufgabe simuliert, wobei die Simulation zwei Agenten umfasst, wobei ein erster der Agenten versucht, in den Gefahrenbereich der Maschine vorzudringen, und ein zweiter der Agenten versucht, durch Erstellung einer angepassten Sicherheitskonfiguration aus einer vorherigen Sicherheitskonfiguration ein Vordringen in den Gefahrenbereich zu verhindern. Die Simulation wird iterativ ausgeführt, wobei für den ersten Agenten und/oder den zweiten Agenten ein Reinforcement Learning ausgeführt wird, um ein verändertes Verhalten des ersten Agenten und/oder des zweiten Agenten in weiteren Iterationen zu erhalten.

Die elektronische Recheneinrichtung kann in der industriellen Maschine integriert sein oder separat zur industriellen Maschine ausgebildet sein. Die Recheneinrichtung kann die finale Sicherheitskonfiguration über eine elektronische Datenverbindung an die industrielle Maschine übertragen.

Für das erfindungsgemäße System gelten die Ausführungen zu dem erfindungsgemäßen Verfahren entsprechend. Dies gilt insbesondere hinsichtlich Vorteilen und Ausführungsformen.

Nachfolgend wird die Erfindung rein beispielhaft unter Bezugnahme auf die Zeichnungen beschrieben. Es zeigen:
**Fig. 1** eine industrielle Maschine mit einer in der Nähe befindlichen Person sowie eine Simulation der industriellen Maschine;
**Fig. 2** die Ausbildung von Schutzfeldern in der Umgebung der industriellen Maschine;
**Fig. 3** eine Schutzfeldumschaltung;
**Fig. 4** eine industrielle Maschine mit einem Kollaborationsbereich; und
**Fig. 5** ein Körpermodell des ersten Agenten.

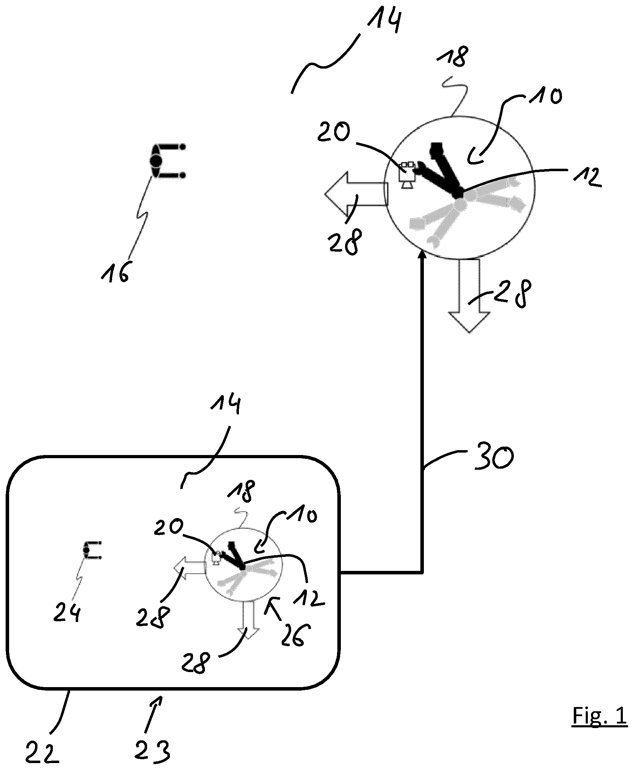

Fig. 1 zeigt eine industrielle Maschine 10, welche einen in sich beweglichen Roboterarm 12 aufweist. Die industrielle Maschine 10 ist zudem ausgebildet, sich als Ganzes in einer Umgebung 14 zu bewegen. In der Umgebung 14 hält sich eine Person 16 auf, die sich potenziell an der Maschine 10 verletzen kann.

Eine solche Verletzung kann insbesondere in einem Gefahrenbereich 18 geschehen, welcher je nach Geschwindigkeit und Position der Maschine 10 bzw. des Roboterarms 12 unterschiedlich groß ausgeprägt und unterschiedlich positioniert sein kann.

Die Maschine 10 umfasst einen Sicherheitssensor 20, mit welchem zumindest ein Teil der Umgebung 14 erfasst werden kann. Der Sicherheitssensor 20 kann beispielsweise die Person 16 erfassen.

Fig. 1 zeigt weiterhin eine elektronische Recheneinrichtung 22 zur Durchführung einer Simulation 23 der industriellen Maschine 10 sowie der Person 16 in der Umgebung 14. In der Simulation wird die Person 16 als erster Agent bezeichnet. Die industrielle Maschine 10 kann durch einen zweiten Agenten 26 gesteuert sein, wobei durch die Simulation 23 und insbesondere durch den zweiten Agenten eine Sicherheitskonfiguration erzeugt und/oder angepasst wird, um ein Vordringen des ersten Agenten 24 in den Gefahrenbereich 18 zu verhindern.

Die Simulation wird iterativ ausgeführt, wobei mittels der Recheneinrichtung 22 ein Reinforcement Learning für den ersten Agenten 24 und den zweiten Agenten 26 ausgeführt wird. In dem Reinforcement Learning wird der erste Agent 24 dafür belohnt, in den Gefahrenbereich 18 der Maschine 10 vorzudringen. Der zweite Agent 26 wird hingegen dafür belohnt, ein Vordringen des ersten Agenten 24 in den Gefahrenbereich 18 zu verhindern. Eine weitere Belohnung erfolgt dafür, wenn der zweite Agent 26 es ermöglicht, dass die industrielle Maschine 10 weiterhin eine Produktionsaufgabe erfüllt.

Zur Erstellung einer immer weiter angepassten Sicherheitskonfiguration kann insbesondere der zweite Agent verschiedene Regeln für die Bewegung der Maschine 10 aufstellen. Die Regeln können dabei bestimmte Bewegungen des Roboterarms 12 oder Bewegungen der gesamten Maschine 10 umfassen. Die Bewegungen sind in Fig. 1 insbesondere durch Pfeile 28 dargestellt. Beispielsweise kann der zweite Agent 26 ein Vordringen des ersten Agenten 24 in den Gefahrenbereich 18 dadurch verhindern, dass die Maschine 10 von dem ersten Agenten 24 wegbewegt wird. Überdies ist es beispielsweise möglich, den Roboterarm 12 derart zu bewegen, dass sich der Gefahrenbereich 18 jeweils auf der dem ersten Agenten 24 abgewandten Seite der Maschine 10 befindet.

Wird nach einer Vielzahl von Iterationen festgestellt, dass eine Sicherheitskonfiguration gefunden ist, welche ein Vordringen des ersten Agenten 24 in den Gefahrenbereich 18 (zumindest nahezu) ausschließt und gleichzeitig eine (zumindest teilweise) Erfüllung der Produktionsaufgabe ermöglicht, so kann diese Sicherheitskonfiguration als finale Sicherheitskonfiguration 30 an die (reale) industrielle Maschine 10 übertragen werden und von der Maschine 10 in deren (realen) Betrieb verwendet werden.

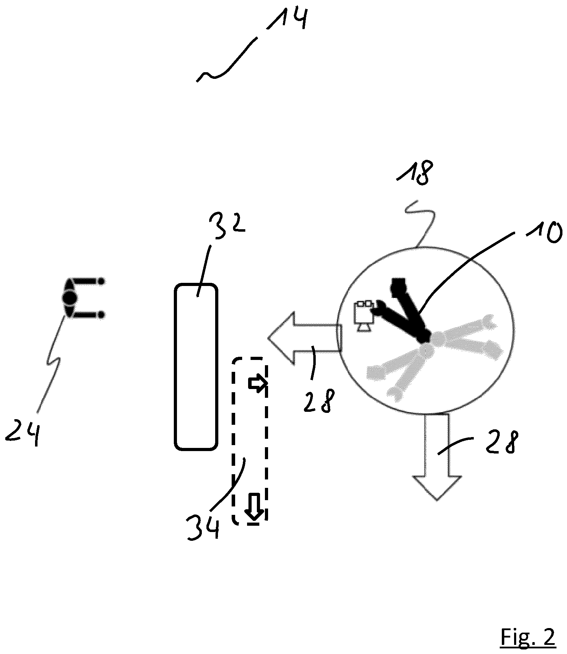

Die Sicherheitskonfiguration, welche durch den zweiten Agenten erstellt und iterativ immer wieder angepasst wird, kann beispielsweise auch Schutzfelder umfassen, wie dies in Fig. 2 gezeigt ist. Fig. 2 zeigt ein statisches Schutzfeld 32 sowie ein dynamisches Schutzfeld 34 innerhalb der Simulation 23. Das dynamische Schutzfeld 34 kann insbesondere anhand der Position des ersten Agenten 24 jeweils in seiner Position und Größe angepasst werden. In der Simulation 23 ist es somit möglich, verschiedene Schutzfelder 32, 34 zu testen und deren Eignung für den späteren realen Einsatz zu evaluieren.

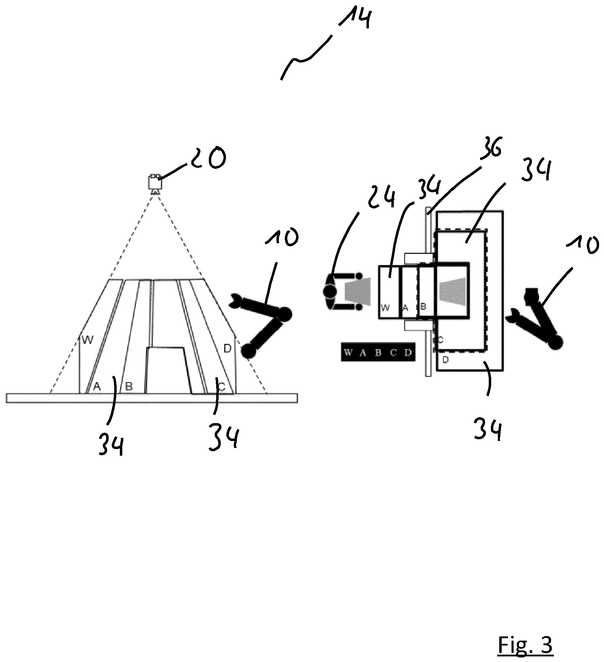

Einen Sonderfall dynamischer Schutzfelder 34 zeigt Fig. 3. Dort ist eine Simulation 23 der industriellen Maschine 10 dargestellt, wobei die industrielle Maschine 10 durch Umgebungsobjekte 36 zumindest teilweise von dem ersten Agenten 24 abgeschirmt ist. Fig. 3 zeigt die Simulation einmal in Draufsicht und einmal in seitlicher Ansicht. In der Ausprägung von Fig. 3 sind die dynamischen Schutzfelder 34 nicht beliebig anpassbar. Stattdessen sind Sub-Schutzfelder W, A, B, C und D definiert, welche unveränderbar sind aber einzeln aktiviert oder deaktiviert werden können. Auf diese Weise kann der Suchraum für das Reinforcement Learning reduziert werden, um schneller zu einer finalen Sicherheitskonfiguration zu gelangen.

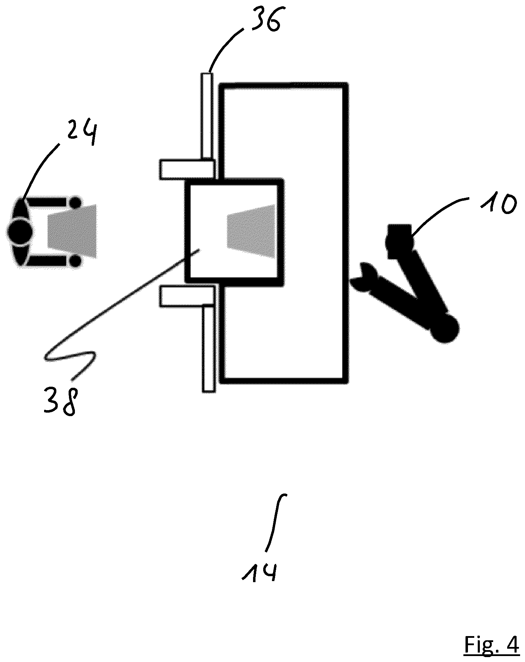

Fig. 4 zeigt eine Industriemaschine 10, welche benachbart zu einem Kollaborationsbereich 38 angeordnet ist. Der Kollaborationsbereich 38 wird wiederum durch Umgebungsobjekte 36, hier beispielsweise in Form von Wänden oder einem Durchgriff, gebildet. Die Belohnung für den ersten Agenten 24 und den zweiten Agenten 26 kann eine Komponente umfassen, die ein erfolgreiches Zusammenarbeiten zwischen dem ersten Agenten und der industrielle Maschine 10 in dem Kollaborationsbereich 38 belohnt.

Es sei erwähnt, dass die Umgebungsobjekte 36 insbesondere auch (nicht dargestellte) dynamische Objekte, wie einen Hubwagen oder einen Mülleimer, umfassen können, welche der erste Agent 24 zu seinem Vorteil einsetzen kann.

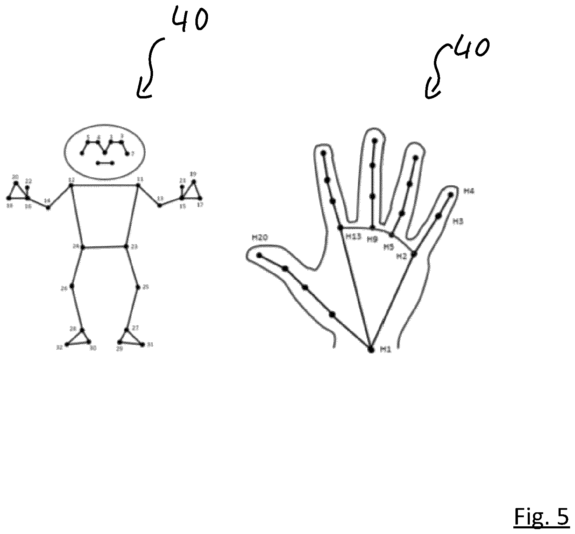

In den Fig. 1 bis 4 ist der erste Agent 24 jeweils in sich unbeweglich, d.h. letztlich als Punkt modelliert und nur in den Figuren schematisch menschenähnlich dargestellt. Insbesondere bei einer engen Zusammenarbeit zwischen Person 16 und Maschine 10 bzw. erstem Agenten 24 und Maschine 10 kann es sinnvoll sein, den ersten Agenten 24 als Körpermodell zu simulieren. Fig. 5 zeigt zwei solcher Körpermodelle 40. Das in Fig. 5 links gezeigte Körpermodell 40 simuliert den gesamten Körper eines Menschen, wobei jedoch Hände und Arme nur mit jeweils wenigen Punkten modelliert sind. Das in Fig. 5 auf der rechten Seite gezeigte Körpermodell 40 betrifft lediglich eine Hand, simuliert dabei aber in jedem Finger mehrere Gelenke und ist auf diese Weise für eine sehr enge Kooperation im Kollaborationsbereich 38 geeignet. Insbesondere ist jeder Punkt der Körpermodelle 40 einzeln bewegbar, wobei aber eine Verbindungsdistanz (gezeigt durch Verbindungslinien zwischen benachbarten Punkten) beibehalten werden muss.

Durch die Simulation des ersten Agenten 24, des zweiten Agenten 26, der industriellen Maschine 10, von Umgebungsobjekten 36 und beispielsweise der Körpermodelle 40 kann eine realistische Nachbildung der realen Umgebung 14 in der Simulation 23 erreicht werden. Durch das Reinforcement Learning gelernte Strategien und Techniken zur Aufrechterhaltung der Produktionsaufgabe bei gleichzeitiger Absicherung des Gefahrenbereichs 18 können somit auf die reale industrielle Maschine 10 übertragen werden. Durch das Reinforcement Learning in der Simulation 23 ist dabei insbesondere eine automatische Erstellung der finalen Sicherheitskonfiguration 30 möglich, wodurch der Aufwand und die benötigte Zeit zur Erstellung der Sicherheitskonfiguration reduziert werden können.

### Bezugszeichenliste

10 industrielle Maschine
12 Roboterarm
14 Umgebung
16 Person
18 Gefahrenbereich
20 Sicherheitssensor
22 Recheneinrichtung
23 Simulation
24 erster Agent
26 zweiter Agent
28 Bewegung
30 finale Sicherheitskonfiguration
32 statisches Schutzfeld
34 dynamisches Schutzfeld
36 Umgebungsobjekt
38 Kollaborationsbereich
40 Körpermodell

## Patentansprüche

1. Verfahren zur Erstellung einer Sicherheitskonfiguration für eine industrielle Maschine (10) zur Vermeidung menschlicher Verletzungen durch die Maschine (10), wobei das Verfahren umfasst, dass
- die Maschine (10), welche zumindest einen Sicherheitssensor (20) aufweist, bereitgestellt wird, wobei die Maschine (10) einen Gefahrenbereich (18) aufweist,
- eine Simulation (23) ausgeführt wird, welche einen Betrieb der Maschine (10) zum Durchführen einer Produktionsaufgabe simuliert,
wobei die Simulation (23) zwei Agenten umfasst, wobei ein erster der Agenten (24) versucht, in den Gefahrenbereich (18) der Maschine (10) vorzudringen, und ein zweiter der Agenten (26) versucht, durch Erstellung einer angepassten Sicherheitskonfiguration aus einer vorherigen Sicherheitskonfiguration ein Vordringen in den Gefahrenbereich (18) zu verhindern, wobei die Simulation (23) iterativ ausgeführt wird, wobei für den ersten Agenten (24) und/oder den zweiten Agenten (26) ein Reinforcement Learning ausgeführt wird, um ein verändertes Verhalten des ersten Agenten (24) und/oder des zweiten Agenten (26) und damit insbesondere eine veränderte Sicherheitskonfiguration in weiteren Iterationen zu erhalten.

2. Verfahren nach Anspruch 1,
wobei die Sicherheitskonfiguration zumindest ein Set von Regeln für die Bewegung der Maschine (10) umfasst, wobei die Regeln in Abhängigkeit der Bewegungen des ersten Agenten (24) zu vorbestimmten Bewegungen der Maschine (10) führen, wobei für die Erstellung der angepassten Sicherheitskonfiguration bevorzugt Regeln geändert, hinzugefügt und/oder gelöscht werden.

3. Verfahren nach Anspruch 1 oder 2,
wobei der Gefahrenbereich (18) der Maschine (10) in der Simulation (23) in Abhängigkeit der Bewegungen der Maschine (10) angepasst wird, wobei bei einem Stillstand der Maschine (10) der Gefahrenbereich (18) bevorzugt entfällt.

4. Verfahren nach einem der vorstehenden Ansprüche,
wobei die Sicherheitskonfiguration zumindest ein Schutzfeld (32, 34) in der Umgebung (14) der Maschine (10) umfasst, wobei eine Schutzfeldverletzung durch den ersten Agenten (24) zu einem vorbestimmten Verhalten der Maschine (10) führt, wobei für die Erstellung der angepassten Sicherheitskonfiguration bevorzugt ein bestehendes Schutzfeld (32, 34) geändert und/oder gelöscht wird und/oder ein Schutzfeld hinzugefügt wird.

5. Verfahren nach einem der vorstehenden Ansprüche,
wobei der erste Agent (24) als punktförmig oder als Körpermodell (40) simuliert wird, wobei das Körpermodell (40) bevorzugt eine separate Bewegung von Körperteilen ermöglicht.

6. Verfahren nach einem der vorstehenden Ansprüche,
wobei die Sicherheitskonfiguration unterschiedliche Schutzfelder (32, 34) und/oder unterschiedliche Regeln für die Bewegung der Maschine (10) umfasst, welche in Abhängigkeit einer Körperhaltung des ersten Agenten (24) aktiviert werden.

7. Verfahren nach einem der vorstehenden Ansprüche,
wobei der erste Agent (24) mehrere separat voneinander agierende Entitäten umfasst, welche bevorzugt kollaborativ versuchen, dass zumindest eine Entität in den Gefahrenbereich (18) der Maschine (10) vordringt.

8. Verfahren nach einem der vorstehenden Ansprüche,
wobei der erste Agent (24) die Sicherheitskonfiguration kennt.

9. Verfahren nach einem der vorstehenden Ansprüche,
wobei der zweite Agent (26) lediglich Daten des Sicherheitssensors (20) zur Verfügung hat.

10. Verfahren nach einem der vorstehenden Ansprüche,
wobei das Reinforcement Learning eine Belohnung für die Agenten (24, 26) umfasst, wobei die Belohnung für den ersten Agenten (24) und den zweiten Agenten (26) unterschiedlich ist und/oder unterschiedliches Verhalten der Agenten (24, 26) belohnt, wobei der erste Agent (24) bevorzugt eine Belohnung für das Vordringen in den Gefahrenbereich (18) erhält und/oder der zweite Agent (26) eine Belohnung für das Durchführen der Produktionsaufgabe erhält.

11. Verfahren nach Anspruch 10,
wobei die Belohnung für den ersten Agenten (24) bei Untätigkeit des ersten Agenten (24) und/oder bei Auslösen eines Schutzfelds (32, 34) reduziert wird, und/oder
wobei die Belohnung für den zweiten Agenten (26) von einer Dauer der Durchführung der Produktionsaufgabe und/oder von einer Effektivität der Durchführung der Produktionsaufgabe abhängt.

12. Verfahren nach einem der vorstehenden Ansprüche,
wobei die Maschine (10) einen Kollaborationsbereich (38) umfasst und der erste Agent (24) und/oder der zweite Agent (26) eine Belohnung für eine erfolgreiche Kooperation des ersten Agenten (24) und der Maschine (10) in dem Kollaborationsbereich erhalten.

13. Verfahren nach einem der vorstehenden Ansprüche,
wobei das iterative Ausführen der Simulation (23) umfasst, dass für eine vorbestimmte Anzahl von Iterationen jeweils nur ein Reinforcement Learning eines der Agenten (24, 26) durchgeführt wird, wobei nach der vorbestimmten Anzahl von Iterationen danach dann nur ein Reinforcement Learning des anderen der Agenten (24, 26) durchgeführt wird.

14. Verfahren nach einem der vorstehenden Ansprüche,
wobei in der Simulation (23) in der Umgebung (14) der Maschine (10) statische und/oder dynamische Umgebungsobjekte (36) vorhanden sind, welche bevorzugt von dem ersten und/oder zweiten Agenten (24, 26) genutzt werden.

15. System zur Erstellung einer Sicherheitskonfiguration für eine industrielle Maschine (10), umfassend die industrielle Maschine (10) und eine elektronische Recheneinrichtung, wobei die Maschine (10) zumindest einen Sicherheitssensor aufweist, wobei die Maschine (10) einen Gefahrenbereich (18) aufweist,
wobei die elektronische Recheneinrichtung eine Simulation (23) ausführt, welche einen Betrieb der Maschine (10) zum Durchführen einer Produktionsaufgabe simuliert,
wobei die Simulation (23) zwei Agenten umfasst, wobei ein erster der Agenten versucht, in den Gefahrenbereich (18) der Maschine (10) vorzudringen, und ein zweiter der Agenten versucht, durch Erstellung einer angepassten Sicherheitskonfiguration aus einer vorherigen Sicherheitskonfiguration ein Vordringen in den Gefahrenbereich (18) zu verhindern,
wobei die Simulation (23) iterativ ausgeführt wird, wobei für den ersten Agenten (24) und/oder den zweiten Agenten (26) ein Reinforcement Learning ausgeführt wird, um ein verändertes Verhalten des ersten Agenten (24) und/oder des zweiten Agenten (26) in weiteren Iterationen zu erhalten.
